# EUROPEAN PATENT SPECIFICATION

(11) **EP 0 967 855 B1**
(45) Date of publication and mention of the grant of the patent: **13.08.2003**
(21) Application number: 97912118.3
(22) Date of filing: 06.10.1997
(51) Int. Cl.: A01C 17/00

(54) **A DEVICE FOR SPREADING GRANULAR MATERIALS, PARTICULARLY FERTILIZERS, AND A MACHINE EQUIPPED WITH THE DEVICE**
GRANULATSTREUVORRICHTUNG, INSBESONDERE DÜNGER UND HIERMIT AUSGESTATTETE MACHINE
DISPOSITIF POUR REPANDRE DES PRODUITS GRANULES, EN PARTICULIER DES ENGRAIS, ET MACHINE EQUIPEE AVEC CE DISPOSITIF

(30) Priority: 10.02.1997 IT PD970023
(43) Date of publication of application: 05.01.2000
(73) Proprietor: Agrex S.p.A., 35010 Curtarolo (IT)
(72) Inventor: BARBIERI, Silvano, I-35010 Curtarolo (IT)
(74) Representative: Cantaluppi, Stefano
(86) International application number: EP9705471
(87) International publication number: WO98034461

(56) References cited:
- EP-A- 0 192 085
- EP-A- 0 213 370
- EP-A- 0 611 264
- EP-A- 0 655 187
- DE-C- 513 386
- US-A- 1 166 477

## Description

### Technical field

The present invention relates to a device for spreading granular materials, particularly fertilizers, according to the preamble to the main claim.

The invention also relates to a machine equipped with a spreading device of the type indicated, which is designed particularly to be used for spreading fertilizer although it is also usable for spreading other mineral or chemical products in granular and/or powder form such as, for example, seeds, salt, sand, rice, etc.

A device for spreading granular materials having the features outlined above is known from EP-A-192085.

### Background art

In known machines, the spreading device normally has a bladed centrifugal spreader comprising one or more disks which are rotated about parallel axes and onto which the product to be spread on the ground is dropped in a suitable manner. Each disk also has a plurality of substantially radial spreader blades for directing the product to be spread by the centrifugal effect induced by the rotation and for projecting it onto the ground from the ends of the blades farthest from the axis of rotation.

The provision of blades to be fixed to the spreader disk with limited adjustability is known. However, these blades have the disadvantage of effectively ensuring homogeneous spreading only for a limited range of working widths affected by the spreading of the fertilizer.

### Disclosure of the invention

The problem upon which the present invention is based is that of providing a device for spreading granular materials which is designed structurally and functionally so as to overcome all of the problems complained of with reference to the prior art mentioned.

This problem is solved, according to the invention, by a spreading device formed in accordance with the following claims.

### Brief description of the drawings

The characteristics and advantages of the invention will become clearer from the detailed description of a preferred embodiment thereof, described by way of nonlimiting example with reference to the appended drawings, in which:

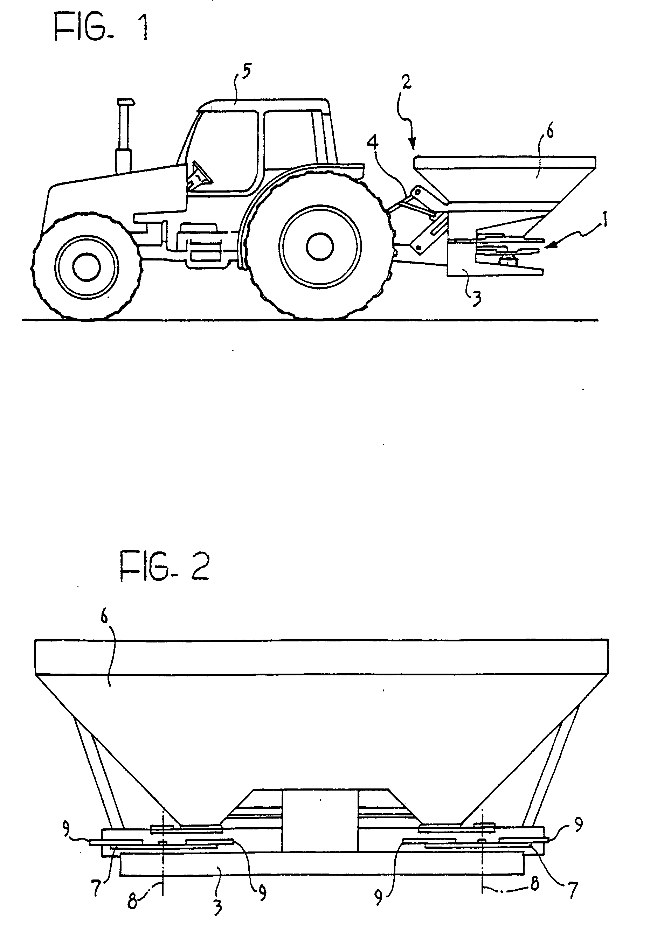

Figure 1 is a side elevational view of a machine equipped with a spreading device according to the invention,
Figure 2 is a partial front elevational view of the machine of Figure 1,
Figure 3 is a partially-sectioned plan view of a detail of the spreading device of Figure 1,
Figure 4 is a section taken on the line IV-IV of Figure 3,
Figure 5 is a partially-sectioned plan view of a variant of the detail of Figure 3,
Figure 6 is a section taken on the line VI-VI of Figure 5.

### Best mode of carrying out the invention

With reference to the drawings mentioned, a device formed in accordance with the present invention for spreading granular materials, particularly fertilizers, is generally indicated 1. The device 1 is intended to be fitted on a spreading machine, generally indicated 2, including a frame 3 for supporting the device 1, means 4 for coupling to a tractor 5, and a hopper 6 mounted on the frame 3 for supplying the fertilizer to the spreading device 1. The latter is intended to be driven by a mechanical transmission connected to the power take-off of the tractor 5.

The spreading device 1 comprises a pair of bladed centrifugal spreaders each including a disk-shaped plate 7 rotatable about its own axis 8. The plates 7 are rotated in opposite directions about their respective axes 8. The plates 7 are identical to one another and only one of them will be described below.

It should be understood that the spreading machine 2 may be equipped with a spreading device 1 having only one centrifugal spreader, although the embodiment described represents a preferred solution.

The plate 7 is mounted in a position such that its axis is offset from the corresponding outlet axis of the hopper 6 so that the plate is struck by the fertilizer which falls from the hopper. The fertilizer is spread on the ground owing to the centrifugal effect induced by the rotation of the plate 7, as will become clearer from the following.

The plate 7 also has a pair of spreader blades 9 extending away from the axis 8 in approximately radial positions and disposed at 180° to one another.

Although in the particular embodiment shown two blades are provided, there may be a different number of blades. A series of holes arranged at regular intervals and all indicated 10 is provided in the plate 7 for the fixing of the blade 9 in a plurality of positions inclined to a radius of the plate 7 by means of screws 11 or similar fixing means.

Each blade 9 extends predominantly longitudinally between opposite ends 9a, 9b and is channel-shaped, with a surface 12 substantially perpendicular to the plane of the plate 7 and constituting a surface for directing the material to be spread. The blade 9 also has two flanges 13, 14 extending from the surface 12 at right angles and defining the channel-shape jointly therewith. Holes 15a, 15b are provided in the flange 14 for the fixing of the blade 9 to the plate 7 by means of the screws 11.

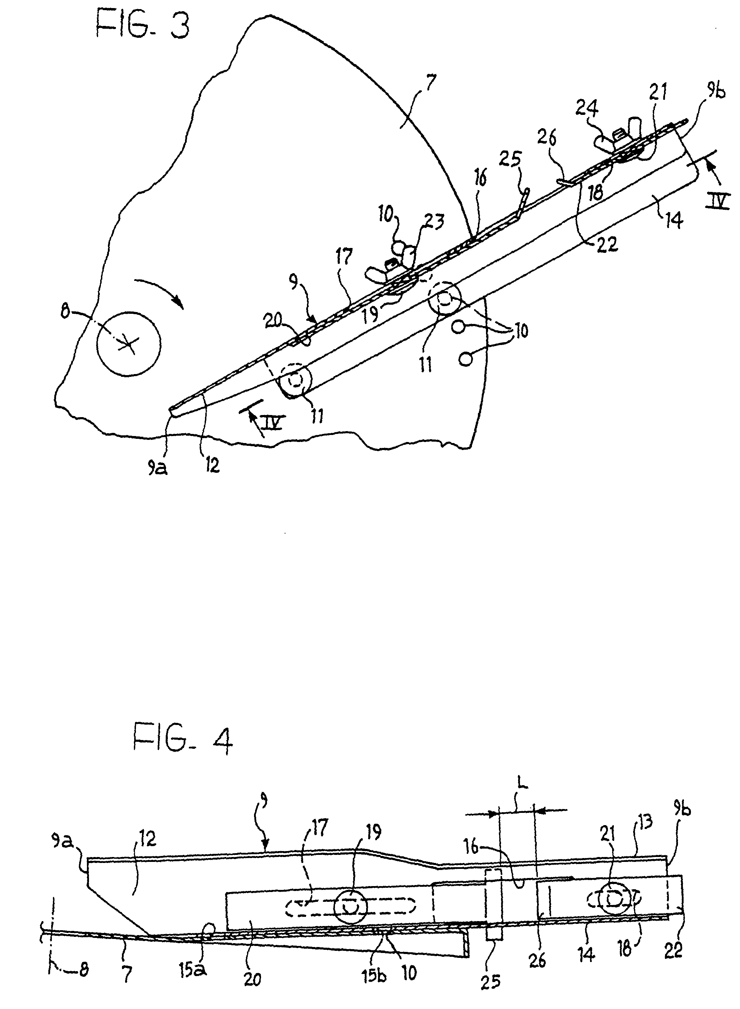

In an intermediate portion on the surface 12 between the ends 9a, 9b there is a through-hole 16 of which the aperture, indicated by the measurement L of Figure 4, is adjustable in position and size, as will be explained further in the following description. A first and a second straight slot, indicated 17 and 18, respectively, are formed on opposite sides of the hole 16 in alignment longitudinally of the blade 9.

The first slot 17 houses with clearance a square-sectioned portion of a first screw 19 which in turn is connected to a first plate-shaped element 20. In accordance with this construction, the element 20 is slidable on the surface 12 with the limited travel permitted by the length of the slot 17 and is of a size such as to shut off the hole 16 at least partially with one of its end portions, thus constituting a first shutter element for the hole.

Similarly, the second slot 18 houses a square-sectioned portion of a second screw 21 which in turn is connected to a second plate-shaped element 22. The latter is slidable on the surface 12 with the limited travel permitted by the length of the slot 18 and is of a size such at to shut off the hole 16 at least partially with one of its end portions, thus constituting a second shutter element for the hole.

Relative sliding between each shutter element 20, 22 and the surface 12 is stopped by means of wing nuts 23, 24 or other clamping systems screwed onto the screws 19, 21, respectively. In accordance with this construction, the shutter elements 20, 22 can be positioned adjustably independently of one another in order to shut off the aperture L of the hole 16.

The aperture L of the hole 16 can be moved relative to the blade by a combination of longitudinal movements of the shutter elements 20, 22 relative to the blade 9, so as to vary its position relative to the rotation axis 8. As a result, a portion of the flow of the fertilizer to be spread, which is directed along the surface 12 of the blade 9 owing to the centrifugal effect, is released through the aperture L of the hole 16 so as to be expelled from the spreader in an intermediate portion of the blade disposed between the ends 9a, 9b at a distance from the rotation axis selected as appropriate by the positioning of the shutter elements 20, 22.

The position relative to the rotation axis 8 of the aperture L for the expulsion of the material can therefore be selected within a range of values defined by the travel permitted by the slots 17, 18.

It should also be noted that, since the movements of the shutter elements 20, 22 are independent of one another, for a predetermined positioning of the aperture L relative to the rotation axis 8, the size of the aperture is adjustable so as to regulate the quantity of material expelled through the hole relative to the quantity transported by the blade 9 and expelled at the end 9b farthest from the axis 8.

Adjacent the aperture L, the shutter elements 20, 22 have respective deflectors 25, 26 which converge in the direction in which the material flows out. These deflectors 25, 26 are shaped so as to direct the fertilizer along the expulsion path through the aperture L of the hole 16. It will be noted that the deflector 25 of the first shutter element 20 has a transverse dimension larger than the corresponding dimension of the aperture L so as to offer a larger surface for directing the material projected through the hole 16.

By virtue of the hole 16, the aperture L of which is adjustable in position and in size as described above, the material to be spread is projected by the centrifugal spreader at speeds and in directions such as to achieve optimal spreading characteristics, according to the working width affected by the spreading. Tests carried out have shown that, with the scattering device of the invention, it is possible to achieve homogeneous, regular and uniform spreading characteristics in all normal working widths.

It should be noted that, in order to vary the spreading characteristics, in centrifugal spreaders according to the invention only some of the blades may have holes 16 and corresponding shutter elements. For example, in a centrifugal spreader with two blades disposed at 180° to one another, only one or both of the blades 9 may have a hole 16 according to the present invention.

For use by the final user, it is envisaged that the spreading device of the invention will be equipped with adjustment tables giving, for each expected range of working widths, the values relating to the positioning and to the size of the aperture L which enable the maximum uniformity and homogeneity of spreading to be achieved, in dependence on the particle size of the material to be spread.

The provision of adjustment tables which enable the position and size of the hole to be adjusted independently on each blade of the spreader according to the desired spreading characteristics is also envisaged.

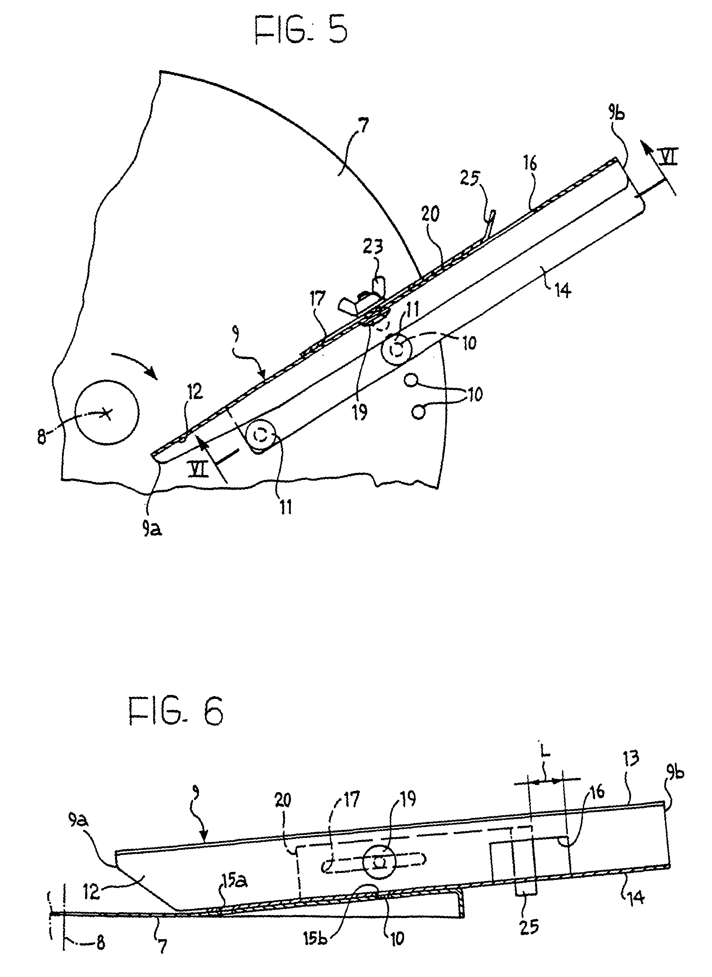

Figures 5 and 6 show a variant of the invention in which details similar to those of the previous embodiment are indicated by the same reference numerals. The variant differs in that only one shutter element 20 is provided for shutting off the aperture L of the hole 16 and is mounted for sliding on the opposite surface of the blade to the surface 12. The arrangement and the length of the corresponding slot 17 is such that the shutter element 20 can be positioned adjustably relative to the blade 9 between two positions in which the aperture L is completely blocked and is of a maximum size, respectively.

## Claims

1. A device for spreading granular materials, particularly fertilizers, comprising at least one bladed centrifugal spreader rotatable about an axis (8), the blades (9) including surfaces (12) for directing the material to be spread and the blades (9) extending away from the axis (8) in order to spread the material by centrifugal effect from their ends (9b) farthest from the axis (8), said device comprising, in the surfaces (12) of the blades (9), at least one intermediate hole (16) for releasing some of the material flowing along the surface (12) and for expelling it from the blades (9) in an intermediate portion thereof, **characterized in** further comprising adjusting means (20,22) disposed on the blade (9) for adjusting the aperture of said hole (16) in oreder to regulate the spreading characteristics of the material expelled frome the spreader through the hole.

2. A device according to Claim 1, in which the adjustment means comprise shutting means mounted on the blades in the region of the hole (16) in order to shut off the aperture (L) at least partially.

3. A device according to Claim 2, in which the shutting means comprise at least one shutter element (20, 22) which can be positioned adjustably on the blade (9) in order selectively to vary the position and/or the size of the aperture (L).

4. A device according to Claim 3, in which the at least one shutter element is guided for sliding along the surface (12) of the blade (9).

5. A device according to Claim 4, comprising at least one slot (17, 18) in the surface (12) of the blade (9), the at least one shutter element (20, 22) being capable of limited sliding along the slot (17, 18), restraining means (19, 21, 23, 24) being provided for selectively stopping the sliding of the at least one shutter element (20, 22).

6. A device according to one or more of Claims 2 to 5, in which the shutting means comprise, adjacent the aperture (L), at least one corresponding deflector element (25, 26) for directing the material expelled through the hole (16).

7. A device according to Claim 2, in which the shutting means comprise a first and a second shutter element (20, 22) which can be positioned adjustably on the blade (9) independently of one another in order selectively to vary the position and/or the size of the aperture (L).

8. A device according to Claim 7, comprising a first (17) and a second (18) slot in the surface (12) of the blade (9), the first (20) and second (22) shutter elements being capable of limited sliding along the first slot (17) and the second slot (18), respectively, restraining means (19, 21, 23, 24) being provided for selectively stopping the sliding of the shutter elements, and respective deflector elements (25, 26) being provided on the shutting means adjacent the aperture (L), the deflector elements (25, 26) converging in the direction in which the material is expelled through the hole (16) in order to direct the material expelled.

9. A machine for spreading granular materials, particularly fertilizers, comprising a spreading device according to one or more of Claims 1 to 8.

## Patentansprüche

1. Granulatstreuvorrichtung, insbesondere Düngerstreuvorrichtung, mit mindestens einem Zentrifugal-Spreader mit Messern, der um eine Achse (8) herum drehbar ist, wobei die Messer (9) Flächen (12) zum Lenken des zu streuenden Granulats besitzen, und die Messer (9) weg von der Achse (8) verlaufen, so dass das Granulat durch den Zentrifugaleffekt von den Enden (9b), die am weitesten von der Achse (8) entfernt sind, weggestreut wird, wobei die genannte Vorrichtung in den Oberflächen (12) der Messer (9) mindestens eine Zwischenöffnung (16) aufweist, um Granulat, das entlang der Oberfläche (12) verläuft, freizugeben, und um es von den Messern (9) in einem Mittelteil abzustoßen, **dadurch gekennzeichnet, dass** sie weiterhin aus Verstelleinrichtungen (20, 22) besteht, die an dem Messer (9) angeordnet sind, um die Öffnung des genannten Lochs (16) zu verstellen, so dass die Streueigenschaften des Granulats, das durch die Öffnung vom Spreader ausgestoßen wird, zu regulieren.

2. Vorrichtung nach Anspruch 1, bei der die Verstelleinrichtung eine Schließvorrichtung besitzt, die an den Messern im Bereich (16) des Loches montiert ist, um die Öffnung (L) mindestens teilweise zu verschließen.

3. Vorrichtung nach Anspruch 2, bei der die Schließvorrichtung mindestens ein Klappelement (20, 22) besitzt, das verstellbar an dem Messer (9) positioniert werden kann, um die Position und/oder die Größe der Öffnung (L) selektiv zu variieren.

4. Vorrichtung nach Anspruch 3, bei dem mindestens ein Klappelement so geführt wird, dass es auf der Oberfläche (12) des Messers (9) entlanggleitet.

5. Vorrichtung nach Anspruch 4 mit mindestens einem Schlitz (17, 18) in der Oberfläche (12) des Messers (9), wobei das mindestens eine Klappelement (20, 22) begrenzt den Schlitz (17, 18) entlanggleiten kann, wobei Rückhalteelemente (19, 21, 23, 24) geliefert werden, um das Entlanggleiten des mindestens einen Klappelementes (20, 22) selektiv zu stoppen.

6. Vorrichtung nach einem oder mehreren der Ansprüche 2 bis 5, bei der die Schließvorrichtung angrenzend an die Öffnung (L) mindestens ein entsprechendes Deflektorelement (25, 26) besitzt, um das durch das Loch (16) ausgestoßene Material entsprechend zu lenken.

7. Vorrichtung nach Anspruch 2, bei der die Schließvorrichtung ein erstes und ein zweites Klappelement (20, 22) besitzt, die unabhängig voneinander verstellbar an dem Messer (9) positioniert werden können, um die Position und/oder die Größe der Öffnung (L) selektiv zu variieren.

8. Vorrichtung nach Anspruch 7 mit einem ersten (17) und einem zweiten (18) Schlitz in der Oberfläche des Messers (9, wobei das erste (20) und zweite (22) Klappelement begrenzt den ersten Schlitz (17) bzw. den zweiten Schlitz (18) entlanggleiten können, wobei Rückhalteelemente (19, 21, 23, 24) geliefert werden, um das Entlanggleiten der Klappelemente selektiv zu stoppen, und jeweilige Deflektorelemente (25, 26) an der Schließvorrichtung angrenzend an die Öffnung (L) geliefert werden, wobei die Deflekrorelemente (25,26) in die Richtung verlaufen, in der das Material durch das Loch (16) ausgestoßen wird, um das ausgestoßene Material zu lenken.

9. Maschine zum Streuen von Granulat, insbesondere Dünger, mit einer Streuvorrichtung nach einem oder mehreren der Ansprüche 1 bis 8.

## Revendications

1. Dispositif pour épandre des substances granulaires, en particuliers des engrais, comprenant au moins un épandeur centrifuge à lames pouvant tourner autour d'un axe (8), des lames (9) comportant des surfaces (12) pour orienter la substance devant être épandue et des lames (9) s'étendant loin de l'axe (6) afin d'épandre la substance par effet centrifuge à partir de leurs extrémités (9b) les plus éloignées de l'axe (8), ledit dispositif comprenant, dans les surfaces (12) des lames (9), au moins un trou intermédiaire (16) pour libérer une certaine quantité de la substance s'écoulant le long de la surface (12) et pour l'expulser les lames (9) dans une partie intermédiaire de celui-ci, **caractérisé en ce qu'**il comprend en outre des moyens de réglage (20, 22) disposés sur la lame (9) pour régler l'ouverture de ladite lame ((16) afin de réguler les caractéristiques d'épandage de la substance expulsée de l'épandeur à travers le trou.

2. Dispositif selon la revendication 1, dans lequel les moyens de réglage comprennent des moyens de fermeture montés sur les lames dans la région du trou (16) afin de fermer l'ouverture (L) au moins partiellement.

3. Dispositif selon la revendication 2, dans lequel les moyens de fermeture comprennent au moins un élément d'obturation (20, 22) qui peut être positionné de manière à pouvoir être réglé sur la lame (9) afin de faire varier de manière sélective la position et/ou la taille de l'ouverture (L).

4. Dispositif selon la revendication 3, dans lequel au moins un élément d'obturation est guidé pour coulisser le long de la surface (12) de la lame (9).

5. Dispositif selon la revendication 4, comprenant au moins une fente (17, 18) dans la surface (12) de la lame (9), le au moins un élément d'obturation (20, 22) étant capable de coulisser de manière limitée le long de la fente (17, 18), des moyens de rétention (19, 21, 23, 24) étant fournis pour arrêter de manière sélective le coulissement du au moins un élément d'obturation (20, 22).

6. Dispositif selon la revendication 2 à 5, dans lequel les moyens de fermeture comprennent, l'ouverture adjacente (L), au moins un élément de déflection (25, 26) pour orienter la substance expulsée à travers les trous (16).

7. Dispositif selon la revendication 2, dans lequel les moyens de fermeture comprennent un premier et un second élément d'obturation (20, 22) qui peuvent être positionnés de manière à pouvoir être ajustés sur la lame (9) indépendamment l'un de l'autre afin de faire varier de manière sélective la position et/ou la taille de l'ouverture (L).

8. Dispositif selon la revendication 7, comprenant une première (17) et une seconde (18) fente dans la surface (12) de la lame ((9), les premier (20) et second (22) éléments d'obturation étant capables de coulisser de manière limitée le long de la première fente (17) et de la seconde fente (18), respectivement, les moyens de rétention (19, 21, 23, 24) étant fournis pour arrêter de manière sélective le coulissement des éléments d'obturation, et les éléments de déflection (29, 28) convergeant dans la direction dans laquelle la substance est expulsée à travers le trou (16) afin d'orienter la substance expulsée.

9. Machine pour épandre des substances granulaires, en particulier des engrais, comprenant au moins un dispositif selon l'une quelconque des revendications 1 à 8.
